# EUROPÄISCHE PATENTSCHRIFT

(11) **EP 0 859 990 B1**
(45) Veröffentlichungstag und Bekanntmachung des Hinweises auf die Patenterteilung: **09.04.2003**
(21) Anmeldenummer: 97924853.1
(22) Anmeldetag: 16.06.1997
(51) Int. Cl.: G06K 9/00

(54) **VERFAHREN UND VORRICHTUNG ZUM ERKENNEN VON NICHT ABGEROLLTEN FINGERABDRÜCKEN**
METHOD AND DEVICE FOR RECOGNIZING NON-UNROLLED FINGERPRINTS
PROCEDE ET INSTALLATION DE RECONNAISSANCE D'EMPREINTES DIGITALES NON DEROULEES

(30) Priorität: 27.08.1996 CH 209996
(43) Veröffentlichungstag der Anmeldung: 26.08.1998
(73) Patentinhaber: Kaba Schliesssysteme AG, 8620 Wetzikon (CH)
(72) Erfinder: HAUKE, Rudolf, D-89168 Niederstotzingen (DE)
(74) Vertreter: Frei, Alexandra Sarah
(86) Internationale Anmeldenummer: CH9700241
(87) Internationale Veröffentlichungsnummer: WO98009246

(56) Entgegenhaltungen:
- US-A- 3 668 633
- US-A- 5 073 950
- SECOND USA-JAPAN COMPUTER CONF., 26.August 1975, TOKYO, JAPAN, Seiten 30-35, XP002039013 K. ASAI ET AL.: "Fingerprint identification system"
- PROC. IECON'84 INT. CONF. ON INDUSTRIAL ELECTRONICS, CONTROL AND INSTRUMENTATION, Bd. 1, 22.Oktober 1984, TOKYO, JAPAN, Seiten 105-109, XP002039014 H. YOSHIKAWA ET AL.: "A microcomputer-based personal identification system"
- PROCEEDINGS. 10TH INTERNATIONAL CONFERENCE ON PATTERN RECOGNITION (CAT. NO.90CH2898-5), ATLANTIC CITY, NJ, USA, 16-21 JUNE 1990, ISBN 0-8186-2062-5, 1990, LOS ALAMITOS, CA, USA, IEEE COMPUT. SOC. PRESS, USA, Seiten 761-766 vol.1, XP002038005 TAKEDA M ET AL: "Finger image identification method for personal verification"

## Beschreibung

Die Erfindung betrifft ein Verfahren und eine Vorrichtung zur Erkennung von nicht abgerollten Fingerabdrücken. Es sind verschiedene Verfahren und Vorrichtungen bekannt, welche die Erkennung eines Fingerabdrucks ermöglichen. Dabei wird in der Regel der Finger zur Kontrasterzeugung an eine geeignete optische Vorrichtung gedrückt, welche z.B. mittels Prismen und des Prinzips der verhinderten Totalreflexion ein Bild der Hautlinien erzeugt. Dabei wird z.B. ein digitales Grauwertbild aufgenommen, welches in ein binäres Bild umgewandelt wird und mittels geeigneter Algorithmen auf ein biometrisches Muster mit relativ geringem Speicherbedarf komprimiert, welches dann mit gespeicherten Fingermustern einer zugeordneten Datenbank zur Erkennung verglichen werden kann. Die Erkennung von Fingerabdrücken mittels abgerollter Fingerlinienbildern ist im polizeilichen Bereich bestens etabliert und bewährt. Eine zunehmende Vielzahl von nicht polizeilichen Anwendungen erfordert jedoch nicht abgerollte Fingerabdrücke. Denn in den meisten Fällen ist es nicht möglich oder nicht wünschbar, die Abrollung des Fingerabdrucks vorzuschreiben. In verschiedenen Fällen ist dies sogar gesetzlich verboten. Bei nicht abgerollten Fingerabdrücken, welche für normale Anwendungen erforderlich sind, entsteht jedoch ein sehr grosses Problem. Wenn nämlich die Orientierung des Fingers bezüglich seiner Längsachse, d.h. eine Verdrehung des Fingers relativ zur Bildaufnahmefläche auftritt, so werden ganz unterschiedliche Teilbildmengen eines ganzen abgerollten Fingerabdrucks je nach Verdrehungswinkel des aufgelegten Fingers erfasst. Im Extremfall kann dies bedeuten, dass die erfasste Teilbildmenge der Oberfläche des Fingers bei Rotation des Fingers um seine Achse von z.B. +20° und -20° zu einer gemeinsamen Bildschnittmenge dieser beiden Lagen führt, welche es praktisch unmöglich macht, mit den zugrunde liegenden mathematischen Verfahren die Person anhand des unterschiedlich aufgelegten Fingers bei genügender Genauigkeit zu identifizieren. D.h. die in der gemeinsamen Bildschnittmenge noch enthaltene Information kann viel zu klein sein, um noch eine sichere Identifikation zu ermöglichen.

Aus der US 5 073 950 ist beispielsweise ein System zur Bestimmung der Handgeometrie bekannt. Dabei werden die Umrisse der Finger, d.h. die Fingerprofile von vier bis acht Finger erfasst. Es werden keine Fingerlinienbilder aufgenommen und es ist keine definierte Positionierung von Hand oder Fingern erforderlich.
Die US 3 668 633 offenbart eine Vorrichtung zur definierten Positionierung der Finger einer Hand mittels Anschlägen. Durch lineares optisches Scanning werden Hautlinienbilder eines ausgewählten Fingers aufgenommen und in einem Computer gespeichert, wo sie mit andern gespeicherten Hautlinienbildern eines Fingers verglichen werden können. Es gibt jedoch keine Hinweise darauf auf eine Verarbeitung dieser Fingerlinienbilder.
Die Publikation Second USA Computer Conf., 26. August 1975, Tokyo, Japan, Seiten 30 - 35, K. Asai et al.:Fingerprint Identifikcation System, offenbart Methoden zur Bestimmung von Core Positionen und weiteren biometrischen Merkmalen wie Minutien aus Fingerlinienbildern.
Aus diesen Publikationen ist jedoch noch keine Lösung der nachstehenden Aufgabe abzuleiten.

Es ist nun Aufgabe der Erfindung, ein Verfahren und eine Vorrichtung anzugeben, mit welchen dieses gravierende Problem überwunden wird und welche eine ganz wesentlich erhöhte Erkennungssicherheit und Erkennungsgenauigkeit ermöglichen, wobei dies mit relativ geringem Speicherbedarf für ein signifikanntes Muster durchführbar sein soll.

Diese Aufgabe wird erfindungsgemäss gelöst durch ein Verfahren nach Anspruch 1 und durch eine Vorrichtung nach Anspruch 9. Dabei werden Bilder von Hautlinien von zwei nebeneinander liegenden Fingern einer Hand aufgenommen, wobei die Orientierungen ihrer Längsachse L1, L2 bestimmt sind oder bestimmt werden und wobei die Verdrehung der Finger um ihre Längsachse durch ein Führungsmittel weitgehend vermieden wird, so dass die Finger nahezu in Normallage gehalten sind und dass dadurch immer definierte, nahezu identische Teilbildmengen von den ganzen abgerollten Fingerabdruckbildern erfasst werden und durch geeignete Auswertungsalgorithmen in eine reduzierte Datenmenge transferiert werden. Durch die unverdrehte Lage und durch die Bestimmung der Fingerlängsachsen werden die Auswertungsalgorithmen einfacher, da im allgemeinen bei nicht definierter Fingerlängsachse aufwendigere Algorithmen erforderlich sind, welche rotationsunabhängig, d.h. Lorenz invariant sind. Das erfindungsgemässe Verfahren ergibt einerseits einfachere Algorithmen und ermöglicht anderseits bei gleicher Speichergrösse signifikantere Muster zu ermitteln. Gleichzeitig wird durch die Erfassung der Bildinformationen von zwei Fingern die False Acceptance Rate FAR und die False Reject Rate FRR ganz wesentlich verbessert. Beträgt beispielsweise die FAR bei einem Verfahren 1:1000 je Finger, wird die Sicherheit der Erkennung durch die Nutzung zweier Finger 1:1 Mio betragen. Oder umgekehrt ist es auch möglich, gleiche Erkennungssicherheit mit einfacheren Merkmalen beider Finger zu erreichen.

Die abhängigen Ansprüche betreffen vorteilhafte Weiterbildungen der Erfindung mit weiteren Verbesserungen bezüglich Systemaufwand, Speicherbedarf, Erkennungssicherheit sowie bezüglich Durchführung und Auswertung der Bildaufnahmen.
Im folgenden wird die Erfindung anhand von Ausführungsbeispielen und Figuren weiter erläutert. Es zeigen
- Fig. 1a - c: die Teilbildmengen nicht abgerollter Fingerabdrücke in Abhängigkeit von der Verdrehung um die Fingerlängsachse
- Fig. 2: eine Bestimmung der Fingerlängsachsen
- Fig. 3: eine erfindungsgemässe Vorrichtung
- Fig. 4: Auflageflächen als Führungsmittel zur verdrehungsfreien Auflage der Finger
- Fig. 5: ein weiteres Beispiel eines Führungsmittels
- Fig. 6: eine Auflageplatte mit Seitenanschlagsfläche zur Parallelführung
- Fig. 7: eine Auflageplatte mit Anlegeschiene
- Fig. 8: einen vorderen Anschlag mit Sensor
- Fig. 9: die Bestimmung von Core-Positionen

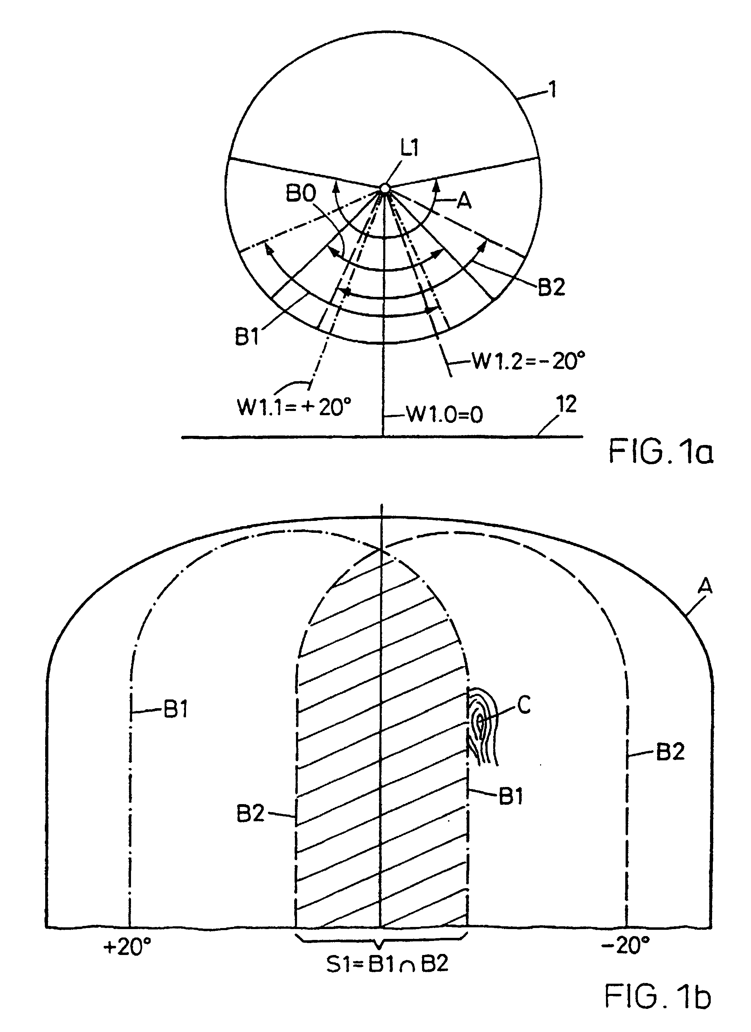

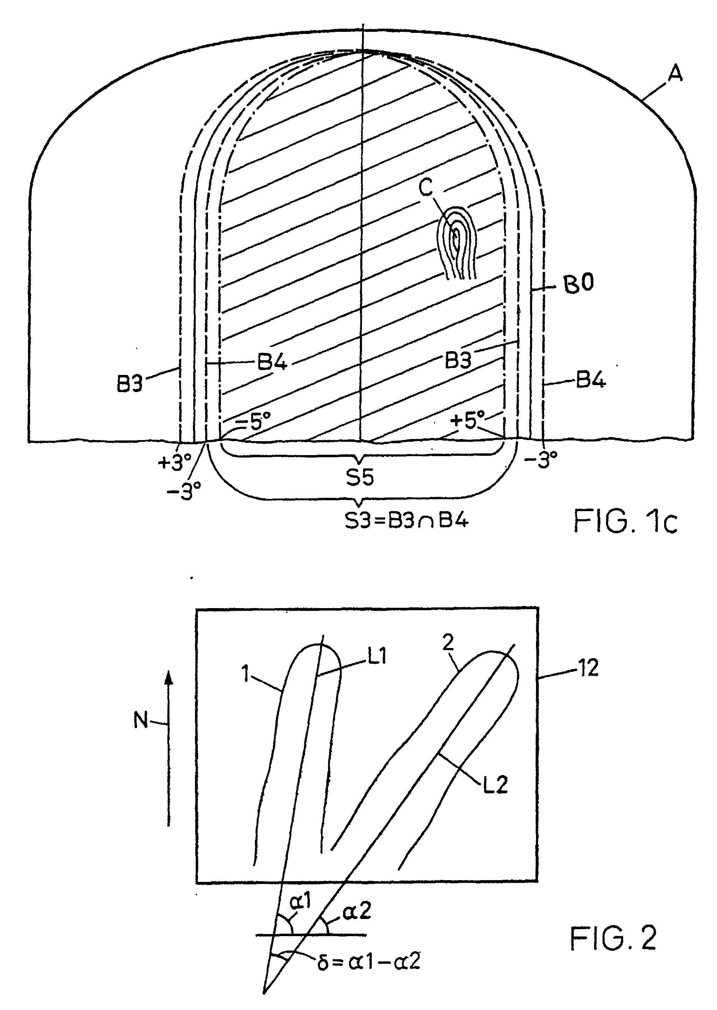

Figur 1 illustriert Teilbildmengen nicht abgerollter Fingerabdrücke in Abhängigkeit von der Verdrehung W1 um die Fingerlängsachse L1. Figur 1a zeigt schematisch an einem Finger 1 im Querschnitt, welche Teilbildmengen B0 bis B2 in Abhängigkeit von der Verdrehung W1 um seine Längsachse L1 zur Aufnahme und Auswertung gelangen. Das ganze abgerollte Fingerabdruckbild erstrecke sich hier über den Bereich A. Bei einfacher, nicht abgerollter Auflage der Finger auf einer Bildaufnahmeplatte 12 entstehen hier entsprechend dem Verdrebungswinkel W1 unterschiedliche Teilbildmengen B0 bis B4, wie dies in den Figuren 1b und 1c dargestellt ist. Bei unverdrehtem Finger mit W1.0 = 0 wird der Teilbildbereich B0 aufgenommen.

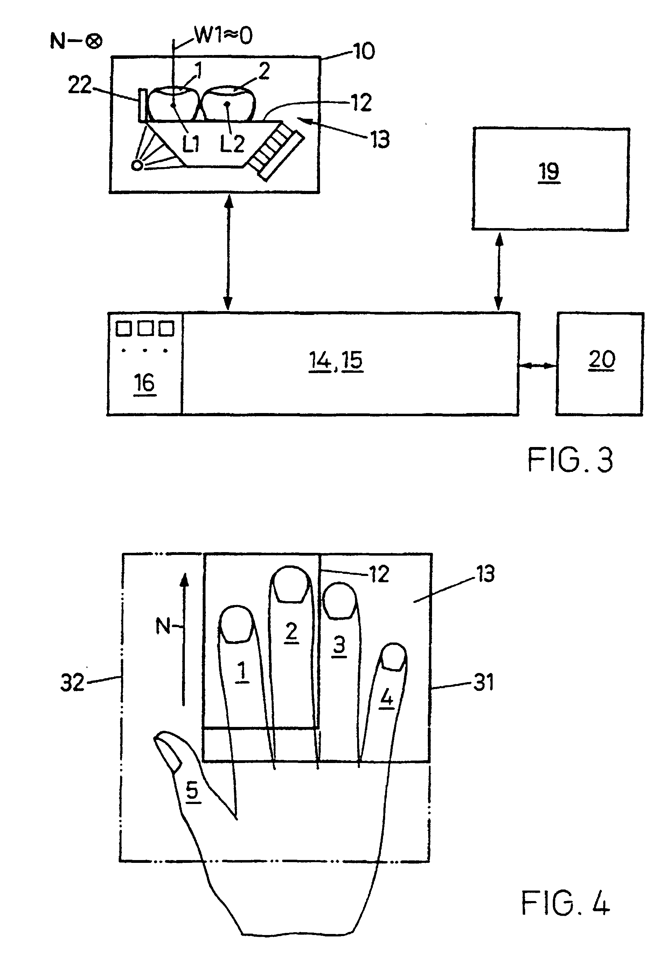

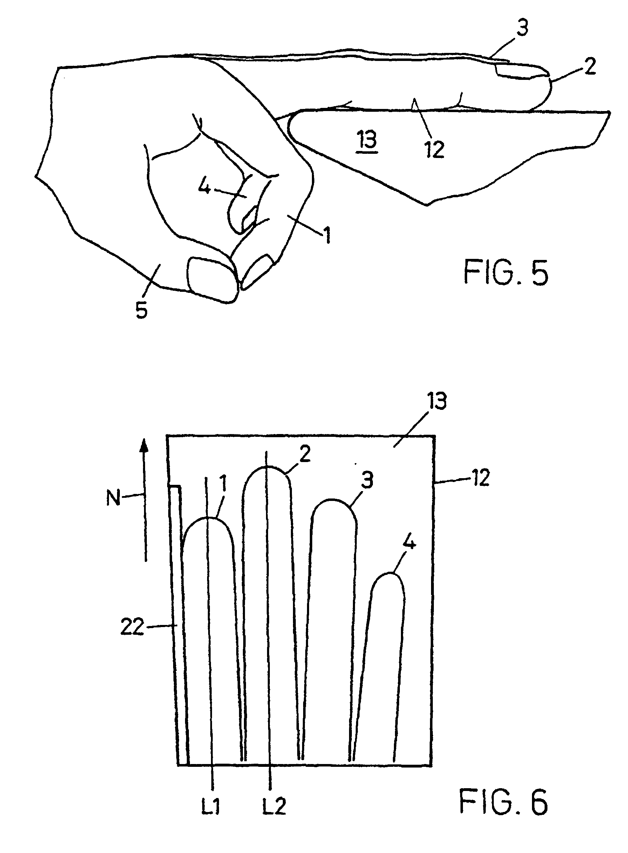

Das in Figur 4 und 5 beispielsweise illustrierte Verdrehführungsmittel 13 dient dazu, die Aufnahmefinger 1, 2 immer möglichst in diese Position B0 zu bringen. Wenn jedoch nur ein Finger und relativ zufällig auf eine Bildaufnahmeplatte aufgelegt wird, so entsptehen zufällig mehr oder weniger grosse Verdrehwinkel W1.

Bei stark verdrehtem Finger, z.B. um W1.1 = +20° und W1.2 = -20°, werden entsprechend sehr unterschiedliche Teilbildmengen B1 und B2 aufgenommen, so dass der gemeinsame Bildbereich, d.h die Schnittmenge S1 von B1 und B2 sehr klein wird. Damit sind in dieser Schnittmenge S1 nur noch sehr wenige Merkmale vorhanden und erfassbar, und es ist keine sichere Erkennung des Fingerabdrucks mehr möglich. So könnte z.B. sogar die Core-Position C im Beispiel in B1 nicht mehr erfassbar sein (Fig. 1b). Bei der erfindungsgemässen Ausrichtung der beiden Aufnahmefinger wird diese Verdrehung jedoch ganz erheblich reduziert auf z.B. nur noch +3° bis -3°, so dass gemäss Beispiel in Figur 1c weitgehend identische Teilbildmengen B3, B4 mit entsprechend grosser Schnittmenge S3 von B3 und B4 erfasst werden, welche mit Sicherheit auch immer die Core-Position C enthalten und welche damit eine viel einfachere und sicherere Auswertung und Erkennung der Fingerabdrücke möglich machen.

Dies kann bei der Auswertung z.B. so berücksichtigt werden, dass mit den Algorithmen nur ein Teilbildbereich entsprechend einer Schnittmenge, z.B. S3 mit W1 = +3° und -3° oder eine Schnittmenge S5 mit W1 = +5° und -5° zur vereinfachten Auswertung gelangt. Diese Wahl könnte auch als Parameter eingegeben werden.

Figur 2 illustriert die Bestimmung der Fingerlängsachsen L1, L2, wenn die beiden Aufnahmefinger 1, 2 nicht definiert und parallel, sondern relativ frei und mit einem Öffnungswinkel δ auf der Auflagefläche 12 liegen. Dazu wird für jeden Finger eine Schwerpunktslinie L1 und L2 bestimmt, woraus deren Orientierung α1, α2 relativ zur Normalrichtung N und der Öffnungswinkel δ = α1 - α2 näherungsweise bestimmt werden. Damit können die Fingerabdruckbilder einfach je auf ihre Normallage rückgerechnet werden.
Erfindungsgemäss besonders einfach und sicher wird die Erkennung, wenn die Aufnahmefinger 1, 2 in Normalrichtung N (d.h. mit α1 = α2 = 0) ausgerichtet sind, wie dies später erläutert wird.

Wie erläutert liegt das Prinzip der Erfindung darin, dass die beiden Aufnahmefinger auch zweifach geführt bzw. positioniert werden:
- zum einen mit dem Führungsmittel 13 so, dass möglichst keine Verdrehung um W1 entsteht und
- zum andern darin, dass die Fingerlängsachen L1, L2 erfasst und zur einfacheren Auswertung genutzt werden.

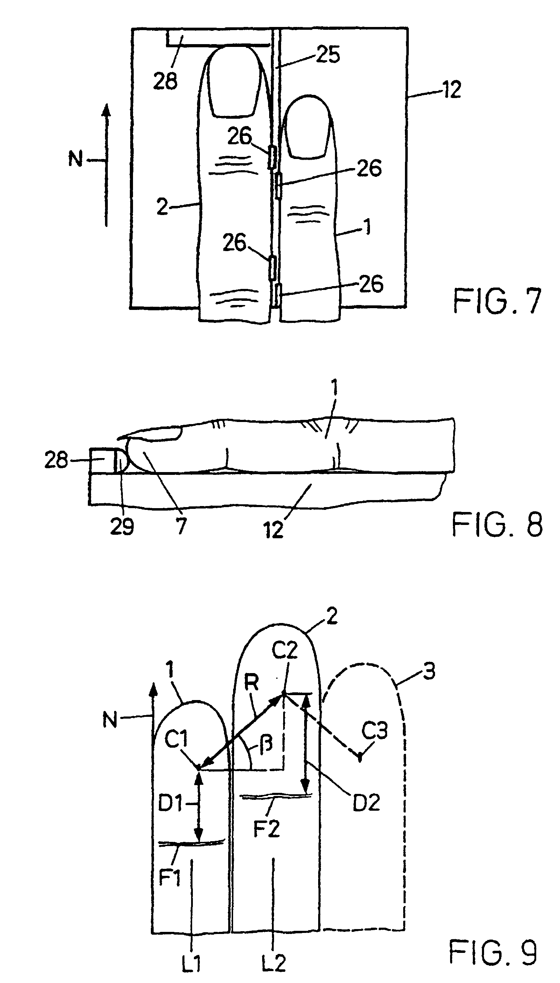

Diese verdrehungsfreie Führung (13) wird in den Figuren 4 und 5 und die Parallelführung in den Figuren 6 und 7 weiter illustriert.

Figur 3 zeigt schematisch eine erfindungsgemässe Vorrichtung zur Ausführung des Verfahrens mit einem Bildaufnahmegerät 10, einer Auswertungselektronik 14, Auswertungsalgorithmen 15 und einer zugeordneten Datenbank 19 mit gespeicherten vergleichenden Fingerabdruckmustern. Die Vorrichtung enthälts auch ein Ein- und Ausgabegerät 16 (z.B zur Eingabe von Parametern, zur Bedienerführung und Resultatanzeige) sowie eine Verbindung zu einem übergeordneten System 20. Die Aufnahme der Fingerlinien geschieht beispielsweise mittels Totalreflexion an einem Prisma, welches als Bildaufnahmeplatte 12 dient. Im Bildverarbeitungsmodul wird ein digitales Grauwertbild aufgenommen, woraus ein binäres Bild mit reduziertem Speichervolumen abgeleitet und daraus mittels geeigneten Algorithmen ein biometrische Muster mit relativ geringem Kapazitätsbedarf bestimmt wird. Die Vorrichtung weist Führungsmittel 13 auf, durch welche die Aufnahmefinger 1 und 2 in bezug auf ihre Längsachsen L1, L2 unverdreht (mit W1 ≈ 0) ausgerichtet werden. D.h. so dass die Aufnahmefinger parallel zur Handebene positioniert sind. Die unverdrehte Ausrichtung der Aufnahmefinger wird zuerst einmal dadurch hervorgerufen, dass zwei nebeneinanderliegende Finger auf die Audageplatte 12 zur Bilderfassung eingesetzt sind.

Weitere Beispiele von Verdreh-Führungsmitteln 13 werden an Fig. 4 und 5 erläutert. Gemäss Figur 4 kann als Führungsmittel 13 z.B. auch eine ebene Auflagefläche 31 für mindestens vier Finger 1 bis 4 einer Hand, d.h. Zeigfinger bis kleiner Finger, vorgesehen sein, so dass alle diese vier Finger flach und unverdreht auf der Auflagefläche aufliegen und wobei nur ein Flächenteilbereich 12 der Auflagefläche als Bildaufnahmeplatte für die beiden Aufnahmefinger 1 und 2 (z.B. Zeigfinger und Mittelfinger) ausgebildet ist. Oder es kann auch eine Auflagefläche 32 für die ganze Hand vorgesehen werden, so dass die ganze Hand flach aufliegt und alle Finger 1 - 4 unverdreht sind, wie als Alternative dargestellt ist.

In Figur 5 kann die Auflage auch so ausgebildet sein, dass nur die beiden Aufnahmefinger auf der Aufnahmeplatte 12 aufliegen (hier z.B. Mittelfinger 2 und Ringfinger 3) und die restlichen Finger 1, 4 der Hand durch geeignete Formgebung 13 abgewinkelt und parallel ausgerichtet unterhalb der Auflageplatte angeordnet werden.

Wie in den Figuren 6 und 7 dargestellt ist, werden zusätzlich auch die Fingerlängsachsen L1, L2 definiert mittels Parallelführungsmitteln 22, 25. Bei besonders vorteilhaften Ausführungen wird die normale Lage der Aufnahmefinger durch entsprechende Führungsflächen sichergestellt. Gemäss Figur. 6 ist dies eine die Normalrichtung N (α = 0) definierende Seitenanschlagsfläche 22, an welche die Aussenseite eines Aufnahmefingers 1 parallel zu dieser Normalrichtung anlegbar ist. Bei geschlossenen Fingern ist damit auch Finger 2 parallel ausgerichtet.

In einer weiteren Variante nach Figur 7 ist eine dünne Anlegeschiene 25 in Normalrichtung N vorgesehen, an welche die Innenseite beider Aufnahmefinger 1, 2 beidseitig anlegbar ist. Die dünne Schiene 25 wird also mit den beiden Fingern eingeklemmt. Um sicherzustellen, dass die Finger beidseitig an der Anlegeschiene positioniert sind, können beidseitig Sensoren 26 den Kontakt mit beiden Fingern überwachen und sicherstellen. Die Nutzung eines solchen Parallelführungsmittels 22, 25 ist besonders vorteilhaft, da hierdurch die Orientierung der Finger in bezug zur erfassenden optischen Einheit festgelegt ist und die auswertenden Algorithmen entsprechend einfacher zu gestalten sind.

Als nebeneinanderliegende Aufnahmefinger können natürlich auch Mittelund Ringfinger (2, 3) oder Ringfinger und kleiner Finger (3, 4) eingesetzt werden. Es wäre sogar denkbar, die Finger 1 und 3 oder 2 und 4 einzusetzen - dies wäre jedoch unpraktisch, aufwendiger und weniger genau.

Als zusätzliches Positionierungsmittel zeigen Figur 7 und Figur 8, von der Seite gesehen, eine vordere Anschlagschiene 28 mit einem Drucksensor 29, mit welchem ein vorgebbarer Anpressdruckbereich bzw. Kraftbereich von z.B. 1 - 3N erfasst und kontrolliert werden kann, mit welchem der Finger zur Bildaufnahme angelegt werden muss. Mit Vorteil wirkt dabei der vordere Anschlag nur auf die Fingerbeere 7, so dass der Finger 1 nicht mit dem Fingernagel anliegt und somit die Fingerposition nicht von der unterschiedlichen Länge des Fingernagels abhängt.

Generell könnten auch weitere Sensoren in Kombination mit den Führungsmitteln eingesetzt werden zur Optimierung und Kontrolle der erfindungsgemässen Positionierung der Aufnahmefinger.

Des weiteren können erfindungsgemäss weitere geometrische Parameter zur Erhöhung der Erkennungsgenauigkeit herangezogen werden wie im folgenden ausgeführt wird. So können zusätzlich auch die für jede Person typischen geometrischen Fingerkonturen in der Weise genutzt werden, dass aus dem einzelnen Fingerabdruckbild die Core-Positionen oder andere relevante Bezugspunkte, z.B. der Schwerpunkt, bestimmt und zueinander ins Verhältnis gesetzt werden.

Figur 9 illustriert als vorteilhaftes Beispiel die Nutzung der Core-Positionen C1, C2 beider Finger als wichtige primäre Biometriedaten, wobei aus den Core-Positionen auch deren Abstandsvektor, d.h. der Abstand R und dessen Richtung β, als Messparameter bestimmt werden. Zusätzlich können z.B. auch die Abstände D1, D2 der Core-Positionen zu den Gelenkfalten F1, F2, hier der obersten Gelenke, bestimmt und genutzt werden.

Solche unveränderliche Informationen einer Person können dazu verwendet werden, bei der Suche in einer Fingerabdrucksdatenbank das Aufsuchen der betreffenden Information zu vereinfachen und erheblich dadurch zu beschleunigen, dass die Datenbank beispielsweise so indexiert wird, dass Abstandsund Winkelinformationen, bzw. primäre Biometriedaten vor der eigentlichen ganzen Fingerabdrucksinformation zum Ausdünnen der in Frage kommenden Daten benutzt werden. Statt nur die Core-Position zweier Finger zu verwenden, könnten natürlich auch drei oder vier Finger zur Erkennung herangezogen werden, wie in Figur 9 mit C3 angedeutet ist.

## Patentansprüche

1. Verfahren zum Erkennen von nicht abgerollten Fingerabdruckbildern, wobei Bilder von Hautlinien eines Fingers einer Hand aufgenommen und die Orientierungen von Fingerlängsachsen bestimmt werden und wobei eine Verdrehung (W1) der Finger um ihre Längsachse durch ein Führungsmittel (13) soweit vermieden wird,
dass bei jedem Erkennungsvorgang definierte praktisch gleiche Teilbildmengen (B3, B4) von ganzen abgerollten Finger-Abdruckbildern (A) erfasst werden, **dadurch gekennzeichnet, dass**
mindestens zwei nebeneinander liegende Finger (1, 2) einer Hand gewählt, davon digitale Grauwertbilder der Fingerlinien aufgenommen werden und daraus mittels Auswertungsalgorithmen ein digitales biometrisches Muster mit reduzierter Datenmenge bestimmt wird.

2. Verfahren nach Anspruch 1, **dadurch gekennzeichnet, dass** die Fingerlängsachsen (L1, L2) durch Ermittlung von Schwerpunktlinien jedes Fingerabdruckbilds bestimmt werden und daraus deren Orientierungswinkel (α1, α2) und deren Öffnungswinkel δ = α1 - α2 bestimmt werden.

3. Verfahren nach Aspruch 1, **dadurch gekennzeichnet, dass** die Fingerlängsachsen L1, L2 durch ein Parallelführungsmittel parallel und in Normalrichtung N gehalten werden (α1 = α2 = 0).

4. Verfahren nach Anspruch 1, **dadurch gekennzeichnet, dass** die Core-Positionen (C1, C2) der beiden Aufnahmefinger (1, 2) bestimmt werden und daraus deren Abstand (R) und dessen Richtung (β) ermittelt werden.

5. Verfahren nach Anspruch 1, **dadurch gekennzeichnet, dass** weitere biometrische Parameter, z.B. Schwerpunkte der Fingerabdrücke, Abstände (D1, D2) und relative Lage der Hautfalten der obersten Gelenke ermittelt werden.

6. Verfahren nach Anspruch 1, dadurch geknnzeichnet, dass eine zugeordnete Datenbank mit Vergleichsmustern (19) nach primären biometrischen Daten indexiert ist.

7. Verfahren nach Anspruch 6, **dadurch gekennzeichnet, dass** als primäre Daten Core-Positionen (C), Lage, Winkel und Abstandsangaben (D) verwendet werden.

8. Verfahren nach Anspruch 1, **dadurch gekennzeichnet, dass** eingeschränkte Büdschnittmengen (S, S3) zur Auswertung mit den Auswertungsalgorithmen (15) verwendet werden.

9. Vorrichtung zum Erkennen von nicht abgerollten Fingerabdruckbildern mit einem Bildaufnahmegerät (10) und einer Auflageplatte (12), auf welcher Bilder von Hautlinien eines Fingers einer Hand aufgenommen werden und auf welcher die Aufnahmefinger mittels Führungsmittel (13) in Bezug auf Ihre Längsachse unverdreht positioniert werden,
so dass bei jedem Erkennungsvorgang definierte praktisch gleiche Teilbildmengen (B3, B4) von ganzen abgerollten Finger-Abdruckbildern (A) erfasst werden, **dadurch gekennzeichnet, dass**
mindestens zwei nebeneinander liegende Finger (1, 2) einer Hand gewählt, davon digitale Grauwertbilder der Fingerlinien aufgenommen werden und daraus mittels Auswertungsalgorithmen einer Auswertungselektronik ein digitales biometrisches Muster mit reduzierter Datenmenge bestimmt wird.

10. Vorrichtung nach Anspruch 9, **dadurch gekennzeichnet, dass** als Führungsmittel (13) eine ebene Auflagefläche für mindestens vier Finger einer Hand (31) oder für die ganze Hand (32) vorgesehen ist, wovon ein Flächenteilbereich als Bildaufnahmeplatte (12) für die zwei Aufnahmefinger 1, 2 ausgebildet ist.

11. Vorrichtung nach Anspruch 9, **dadurch gekennzeichnet, dass** eine die Normalrichtung (N) definierende Seitenanschlagsfläche (22) an der Auflageplatte angeordnet ist, an welche eine Aussenseite eines Aufnahmefingers parallel zur Normalrichtung anlegbar ist.

12. Vorrichtung nach Anspruch 9, **dadurch gekennzeichnet, dass** als Parallel-Führungsmittel eine Anlegeschiene (25) in Normalrichtung (N) vorgesehen ist, an welche die Innenseite beider Aufnahmefinger (1,2 beidseitig anlegbar ist.

13. Vorrichtung nach Anspruch 12, **dadurch gekennzeichnet, dass** Sensoren (26) an der Anlegeschiene (25) beidseitig den Kontakt mit der Innenseite beider Finger (1,2) überwachen.

14. Vorrichtung nach Anspruch 9, **dadurch gekennzeichnet, dass** ein vorderer Anschlag (28) für den längeren Aufnahmefinger vorgesehen ist.

15. Vorrichtung nach Anspruch 14, **dadurch gekennzeichnet, dass** der vordere Anschlag (28) die Fingerbeere (7) des längeren Aufnahmefingers unterhalb des Fingernagels berührt.

16. Vorrichtung nach Anspruch 14, **dadurch gekennzeichnet, dass** am vorderen Anschlag (28) mittels eines Sensors (29) ein definierter Druckbereich für den Kontakt mit dem Finger, z.B. von 1 bis 2 N einstellbar, ist.

## Claims

1. Method for the identification of not-enrolled fingerprint images, wherein images of skin lines of a finger of a hand are recorded and the orientations of finger longitudinal axes are determined and whereby the rotation (W1) of the fingers about their longitudinal axis is prevented by a guidance means (13) as far as that during each identification process clearly defined, almost identical partial image quantities (B3, B4) of whole, enrolled fingerprint images (A) are detected, **characterized in that**
at least two juxtaposed fingers (1, 2) of a hand are chosen,
that therefrom digital grey value images of the skin lines are determined
and therewith by means of evaluation algorithms a digital biometric pattern with a reduced date quantity is determined.

2. Method according to claim 1, **characterized in that** the finger longitudinal axes (L1, L2) are determined by establishing centroid lines of each fingerprint image and from same are determined their orientation angles ( α1, α2) and their aperture angles δ = α1 - α2.

3. Method according to claim 1, **characterized in that** the finger longitudinal axes (L1, L2) are kept parallel and in the normal direction N by a parallel guidance means (α1 = α2 = 0).

4. Method according to claim 1, **characterized in that** the core positions (C1, C2) of the two recording fingers (1, 2) are determined and from same the spacing (R) and direction (β) are established.

5. Method according to claim 1, **characterized in that** further biometric parameters, e.g. centres of gravity of fingerprints, spacings (D1, D2) and the relative position of the skin folds of the top joints are determined.

6. Method according to claim 1, **characterized in that** an associated data bank with comparison patterns (19) is indexed according to primary biometric data.

7. Method according to claim 6, **characterized in that** core positions (C), locations, angles and spacing data (D) are used as primary data.

8. Method according to claim 1, **characterized in that** restricted image section quantities (S, S3) are used for evaluating with evaluation algorithms (15).

9. Apparatus for the identification of not-enrolled fingerprint images with an image recording device (10) and a support plate (12) on which images of skin lines of a finger of a hand are recorded and on which the recording fingers are positioned in unturned manner relative to their longitudinal axis by guidance means (13) so that during each identification process clearly defined, almost identical partial image quantities (B3, B4) of whole, enrolled fingerprint images (A) are detected, **characterized in that**,
at least two juxtaposed fingers (1, 2) of a hand are chosen,
that therefrom digital grey value images of the skin lines are determined
and therewith by means of an evaluating electronics with evaluation algorithms a digital biometric pattern with a reduced date quantity is determined.

10. Apparatus according to claim 9, **characterized in that** the guidance means (13) are constituted by a planar support surface for at least four fingers of a hand (31) or for the whole hand (32), whereof a surface part area is constructed as an image recording plate (12) for the two recording fingers (1, 2).

11. Apparatus according to claim 9, **characterized in that** a lateral stop face (22) defining the normal direction (N) is placed on the support plate and to which can be applied, parallel to the normal direction an outside of a recording finger.

12. Apparatus according to claim 9, **characterized in that** the parallel guidance means is constituted by a register rail (25) in the normal direction (N) and to which on either side can be applied the inside of both recording fingers (1, 2).

13. Apparatus according to claim 12, **characterized in that** sensors (26) on the register rail (25) on both sides monitor the contact with the inside of both fingers (1, 2).

14. Apparatus according to claim 9, **characterized in that** a front stop (28) for the longer recording finger is provided.

15. Apparatus according to claim 14, **characterized in that** the front stop (28) is in contact with the finger pad (7) of the longer recording finger below the fingernail.

16. Apparatus according to claim 14, **characterized in that** on the front stop (28) a clearly defined pressure range for the contact with the finger of e.g. 1 to 2N can be set by means of a sensor (29).

## Revendications

1. Procédé de reconnaissance d'images d'empreintes digitales non déroulées, dans lequel des images des lignes de la peau d'un doigt d'une main sont à enregistreres et les orientations des axes longitudinaux du doigt sont déterminées, une rotation (W1) du doigt autour de son axe longitudinal étant suffisamment empêchée par un moyen de guidage (13) pour que lors de chaque opération de reconnaissance, des quantités définies, pratiquement identiques, d'images partielles (B3, B4) soient saisies dans des images (A) complètement déroulées d'empreintes digitales, **caractérisé en ce qu'**au moins deux doigts (1, 2) d'une main, voisins l'un de l'autre, sont sélectionnés, des images numériques en valeurs de gris des lignes des doigts étant à enregistreres et à partir de celles-ci, un motif biométrique numérique contenant une quantité réduite de données est déterminé à partir d'algorithmes d'évaluation.

2. Procédé selon la revendication 1, **caractérisé en ce que** les axes longitudinaux (L1, L2) du doigt sont déterminés par détection des lignes de gravité de chaque image d'empreinte digitale, leur angle d'orientation (α1, α2) et leur angle d'ouverture δ = α1 - α2 étant déterminés à partir de cette image de l'empreinte digitale.

3. Procédé selon la revendication 1, **caractérisé en ce que** les axes longitudinaux du doigt (L1, L2) sont maintenus parallèles et dans une direction normale N (α1 = α2 = 0) par un moyen de guidage parallèle.

4. Procédé selon la revendication 1, **caractérisé en ce que** les positions de coeur (C1, C2) des deux doigts à enregistrer (1, 2) sont déterminées, leur distance (R) et leur orientation (β) étant déterminée à partir de ces enregistrements.

5. Procédé selon la revendication 1, **caractérisé en ce que** d'autres paramètres biométriques, par exemple les centres de gravité des empreintes digitales, les distances (D1, D2) et la position relative des plis de la peau de la phalange supérieure sont déterminés.

6. Procédé selon la revendication 1, **caractérisé en ce qu'**une base de données associée qui contient des motifs comparatifs (19) est actualisée en fonction de données biométriques primaires.

7. Procédé selon la revendication 6, **caractérisé en ce que** l'on utilise comme données primaires les positions de coeur (C), la position, l'angle et des données de distance (D).

8. Procédé selon la revendication 1, **caractérisé en ce que** des parties d'image réduites (S, S3) sont utilisées pour l'évaluation à l'aide des algorithmes d'évaluation (15).

9. Dispositif pour la reconnaissance d'images d'empreintes digitales non déroulées à l'aide d'un appareil (10) d'enregistrement d'images et d'une plaque d'appui (12) sur laquelle des images des lignes de la peau d'un doigt d'une main sont enregistrées et sur laquelle les doigts à enregistrer sont positionnés à l'aide de moyens de guidage (13) de manière à ne pas tourner par rapport à leur axe longitudinal,
de telle sorte que lors de chaque opération de reconnaissance, des parties d'image définies (B3, B4), pratiquement identiques, d'images complètes (A) d'empreintes digitales déroulées sont saisies, **caractérisé en ce qu'**au moins deux doigts (1, 2) voisins d'une main sont sélectionnés, **en ce que** des images numériques en valeurs de gris des lignes des doigts sont enregistrées et qu'à partir de celles-ci, un motif biométrique numérique présentant une quantité réduite de données est déterminé au moyen d'algorithmes d'évaluation d'une électronique d'évaluation.

10. Dispositif selon la revendication 9, **caractérisé en ce que** comme moyen de guidage (13), il prévoit une surface d'appui plane pour au moins quatre doigts d'une main (31) ou pour la main entière (32) et dont une zone partielle plane est configurée comme plaque (12) d'enregistrement d'images pour deux doigts à enregistrer (1, 2).

11. Dispositif selon la revendication 9, **caractérisé en ce qu'**une surface latérale de butée (22) définissant la direction normale (N) et sur laquelle un côté extérieur d'un doigt à enregistrer peut être placé parallèlement à la direction normale est disposée sur la plaque d'appui.

12. Dispositif selon la revendication 9, **caractérisé en ce que** comme moyen de guidage parallèle, il prévoit un rail d'appui (25) orienté dans la direction normale (N), sur chaque côté duquel les côtés intérieurs de deux doigts à enregistrer (1, 2) peuvent être placés.

13. Dispositif selon la revendication 12, **caractérisé en ce que** des capteurs (26) situés sur le rail d'appui (25) surveillent des deux côtés le contact avec le côté intérieur des deux doigts (1, 2).

14. Dispositif selon la revendication 9, **caractérisé en ce qu'**une butée avant (28) est prévue pour le plus long doigt à enregistrer.

15. Dispositif selon la revendication 14, **caractérisé en ce que** la butée avant (28) touche la pointe (7) du plus long doigt à enregistrer en dessous de l'ongle du doigt.

16. Dispositif selon la revendication 14, **caractérisé en ce qu'**une zone définie de poussée sur la butée avant (28), pour le contact avec le doigt, peut être ajustée par exemple de 1 à 2 N au moyen d'un capteur (29).
